# EUROPÄISCHE PATENTANMELDUNG

(11) **EP 1 845 655 A1**
(43) Veröffentlichungstag der Anmeldung: **17.10.2007**
(21) Anmeldenummer: 07007513.0
(22) Anmeldetag: 12.04.2007
(51) Int. Cl.: H04L 9/32

(54) **Mehrdeutig Signature Schéma**

(30) Priorität: 13.04.2006 DE 102006017985
(71) Anmelder: timeproof Time Signature Systems GmbH, 21079 Hamburg (DE)
(72) Erfinder: Neische, Armin, 21335 Lüneburg (DE)
(74) Vertreter: Schupfner, Georg

(57) **Zusammenfassung**

Gegenstand der Erfindung ist ein Verfahren zur Sicherstellung der Identität, der Integrität und der Authentizität von beliebig signierten Daten, zu deren rechtlicher Anerkennung als Dokument und der Abgabe einer Willenserklärung über den Inhalt des aus den Daten erzeugten Dokuments, das mit Hilfe einer nicht mit der Identität des Signierenden in Verbindung stehenden qualifizierten Signatur signiert wurde.

## Beschreibung

Die Erfindung betrifft ein Verfahren zur Sicherstellung der Identität, der Integrität und der Authentizität von beliebig signierten Daten zu deren rechtlicher Anerkennung als Dokument und der Abgabe einer Willenserklärung über den Inhalt des aus den Daten erzeugten Dokuments, das mit Hilfe einer nicht mit der Identität des Signierenden in Verbindung stehenden qualifizierten Signatur oder qualifizierten Signatur mit Anbieterakkreditierung signiert wurde.

Wenn nicht ausdrücklich anders bezeichnet, soll vorliegend der Begriff der qualifizierten Signatur die qualifizierte Signatur mit Anbieterakkreditierung umfassen.

Durch die Signatur wird die Identität, die Integrität und Authentizität von beliebigen Daten geschützt. Die Qualität der Signatur entscheidet über den rechtlichen Status der signierten Daten. Die Gesetzgebung vieler Staaten definiert vier Qualitätsstufen für die Signatur: die einfache Signatur, die fortgeschrittene Signatur, die qualifizierte Signatur und die qualifizierte Signatur mit Anbieterakkreditierung.

Für das hier beschriebene Verfahren ist grundsätzlich nur ausschlaggebend, dass die qualifizierte Signatur die Eindeutigkeit der Identität des Signierenden sowie die Integrität und die Authentizität der signierten Daten rechtsgültig sicherstellt und die vorgenannten Kriterien beweisbar macht. Die qualifizierte Signatur erlaubt dem Signierenden der Daten die Abgabe einer rechtsverbindlichen Willenserklärung über den Inhalt des aus den Daten erzeugten Dokuments, das mit Hilfe der qualifizierten Signatur signiert wurde.

Für die Erzeugung von qualifizierten Signaturen oder die Erzeugung von qualifizierten Signaturen mit Anbieterakkreditierung sind spezielle Verfahren entwickelt und vorgeschrieben, wobei für die qualifizierte Signatur mit Anbieterakkreditierung zusätzlich eine akkreditierte Umgebung erforderlich ist. Zwingend vorgeschrieben ist die sichere Aufbewahrung des privaten Schlüssels der zum Erzeugen der Signatur benötigt wird. Diesen Schutz bietet eine akkreditierte Umgebung oder ein technisches Verfahren, das sicherstellt, dass die oben genannten Bedingungen zum Schutz des privaten Schlüssels erfüllt sind. Die zum Schutz des privaten Schlüssels verwendeten Verfahren unterliegen einer Zertifizierung nach Richtlinien, die der Gesetzgeber vorschreibt.

Ein Datenverarbeitungssystem, welches die qualifizierte Signatur erzeugen soll, muss mit den technischen Merkmalen, die zur Erzeugung der qualifizierten Signatur vorgeschriebenen sind, versehen werden. Datenverarbeitungssysteme, die eine qualifizierte Signatur mit Anbieterakkreditierung benötigen, müssen in die akkreditierte Umgebung einbezogen werden.

Die qualifizierte Signatur kann auf zwei Arten generiert werden:
1. Die Verwendung eines Authentifizierungstokens wird für jede einzelne Signatur notwendig. Beispielsweise kann das Authentifizierungstoken Bestandteil einer Signaturkarte sein.
2. Die Verwendung eines Authentifizierungstokens wird einmalig notwendig; nach der Verwendung des Authentifizierungstokens können beliebig viele Signaturen erzeugt werden.

Bei der ersten Verwendungsart wird durch die Verwendung des Authentifizierungstokens eine Willenserklärung über das aus den Daten mit Hilfe der qualifizierten Signatur erzeugte Dokument abgegeben, da zur Erzeugung der Signatur bewusst der Authentifizierungstoken verwendet werden muss.

Bei der zweiten Verwendungsart wird der Authentifizierungstoken einmalig verwendet. Der Authentifizierungstoken muss nicht der Identität desjenigen entsprechen, der Daten mit diesem, diese Verwendungsart nutzenden Datenverarbeitungssystem signieren möchte. Eine Willenserklärung desjenigen, der Daten mit diesem, diese Verwendungsart nutzenden Datenverarbeitungssystem signieren möchte, ist somit nicht möglich, da das Datenverarbeitungssystem keine weitere Verwendung des Authentifizierungstokens verlangt.

Soll oder muss eine Willenserklärung abgegeben werden, so ist die erste Verwendungsart mit der für jeden Vorgang erforderlichen Eingabe des Authentifizierungstokens bei Erzeugung einer Signatur notwendig.

Sind Datenverarbeitungssysteme, die eine qualifizierte Signatur nach der ersten Verwendungsart benötigen, verteilt aufgestellt, so erhöht sich der finanzielle und/oder organisatorische Aufwand zur Erstellung der qualifizierten Signatur um jeweils die Anzahl an Datenverarbeitungssystemen, die die qualifizierte Signatur erzeugen sollen.

Ein Datenverarbeitungssystem zur Erzeugung von qualifizierten Signaturen, das die oben beschriebene zweite Verwendungsart nutzt, zentral eingesetzt, kann alle aus mehr als einem Datenverarbeitungssystem erstellten Daten mit Hilfe einer qualifizierten Signatur auf den rechtlichen Status eines Dokumentes heben.

Wenn das zentrale Datenverarbeitungssystem nur eine Identität hat, kann das signierte Dokument nicht eindeutig dem Signierenden zugeordnet werden. Durch die Trennung der Eingabe eines Authentifizierungstokens und der Erstellung der Signatur nach der oben beschriebenen zweiten Verwendungsart, kann das zentral eingesetzte Datenverarbeitungssystem zur Erzeugung von qualifizierten Signaturen nicht zur Abgabe einer Willenserklärung verwendet werden.

Der Erfindung liegt die Aufgabe zugrunde, die Identität des die Daten Signierenden durch eine beliebige Signatur sicherzustellen und diese Daten und/oder eine beliebige Signatur durch den Einsatz eines zentralen Datenverarbeitungssystems zur Erzeugung einer qualifizierten Signatur auf den rechtlichem Status eines Dokuments zu heben, ohne die Möglichkeit der Nachweisbarkeit der Identität des Signierenden der Daten zu verlieren.

Ferner soll die Abgabe einer Willenserklärung über den Inhalt des aus den Daten erzeugten Dokuments, das mit einer nicht der Identität des Signierenden entsprechenden qualifizierten Signatur versehen wurde, dadurch sichergestellt werden, dass durch die Eingabe eines Authentifizierungstokens durch den Signierenden für die Erstellung einer beliebigen Signatur des Signierenden bewusst der Signaturvorgang ausgelöst wird.

Dabei ist zu berücksichtigen, dass mehr als ein lokales Datenverarbeitungssystem und somit mehr als ein Daten-Signierender mit einer zentralen Signatureinheit zur Erstellung von qualifizierten Signaturen arbeitet.

Die erfindungsgemäße Aufgabe wird durch den Gegenstand des beigefügten unabhängigen Anspruchs gelöst. Bevorzugte Ausführungsformen sind Gegenstand der Unteransprüche oder nachfolgend beschrieben.

Mit dem erfindungsgemäßen Verfahren wird die eindeutige Nachweisbarkeit der Identität des Signierenden der Daten und der rechtlichen Anerkennung als Dokument für beliebig signierte Daten und die Abgabe einer Willenserklärung über den Inhalt des aus den Daten erzeugten Dokuments, das mit Hilfe einer nicht der Identität des Erklärenden entsprechenden qualifizierten Signatur signiert ist, sichergestellt, wenn es nicht möglich oder gewünscht ist, mehr als eine Datenverarbeitungsanlage mit dem technischen Verfahren, das zur Erzeugung einer qualifizierten Signatur benötigt wird, auszustatten.

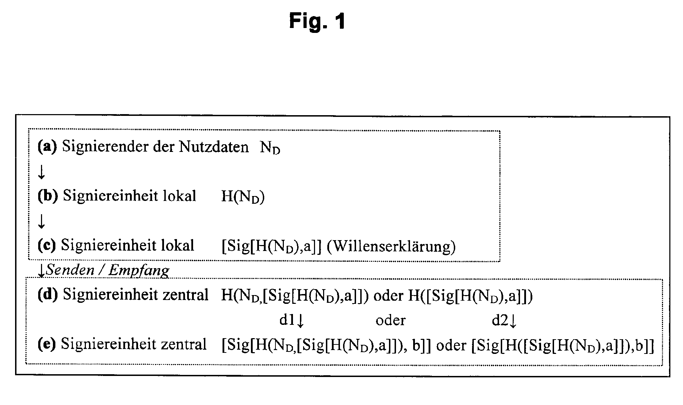

Im Folgenden wird das erfindungsgemäße Verfahren anhand eines Beispiels mit einer lokalen Datenverarbeitungsanlage und einer zentralen Signiereinheit und der beigefügten Fig. 1 exemplarisch näher erläutert, wobei das Verfahren tatsächlich sinnvoll nur auf mehrere lokale Datenverarbeitungsanlagen anwendbar ist.

Zunächst liegen dem Signierenden die Daten N_{D} vor (a). Von der lokalen Signiereinheit wird zunächst ein Hash H(N_{D}) über die Daten N_{D} gebildet (b). Die lokale Signiereinheit signiert nach Verwendung eines Authentifizierungstokens nun diesen Hash H(N_{D}) unter Verwendung der Authentifizierungsinformation a des Signierenden [Sig[H(N_{D}),a] (c). Durch die lokale Signatur [Sig[H(N_{D}),a] und die Authentifizierungsinformation a des Signierenden ist die eindeutige Nachweisbarkeit der Identität des Signierenden der Daten gewährleistet.

Um für die Daten N_{D} die rechtliche Anerkennung als Dokument (Papierform) zu erlangen, werden die Daten N_{D} und die auf der lokalen Signiereinheit erzeugte Signatur [Sig[H(N_{D}),a] an eine der lokalen Signiereinheit unmittelbar zugeordneten zentrale Signiereinheit gesendet, die den gesetzlichen Anforderungen zur Erzeugung einer qualifizierten Signatur entspricht. Die zentrale Signiereinheit ist mehren lokalen Signiereinheiten unmittelbar zugeordnet (ein zu mehreren). Die zentrale Signiereinheit bildet einen Hash H(N_{D,}[Sig[H(N_{D}),a]) (Variante d1) bzw. H([Sig[H(N_{D}),a]) (Variante d2) über die Daten N_{D} und/oder die auf der lokalen Signiereinheit erzeugten Signatur [Sig[H(N_{D}),a] (d). Die zentrale Signiereinheit erzeugt nun über den aus dem über die Daten N_{D} und/oder die lokal erzeugte Signatur [Sig[H(N_{D}),a] erzeugten Hash H(N_{D,}[Sig[H(N_{D}),a]) eine Signatur [Sig[H(N_{D,}[Sig[H(N_{D}),a]), b] (Variante d1) bzw. [Sig[H([Sig[H(N_{D}),a]), b] (Variante d2), mit der der zentralen Signiereinheit zugewiesenen Authentifizierungsinformation b (e).

Der Empfänger erhält die Daten N_{D}, die Signatur aus (c) und die Signatur aus (e). Er überprüft die Identität b aus der Signatur aus (e), entschlüsselt den Hash H von Signatur aus (e), rechnet den Hash über die Signatur aus (c) (Variante d2) oder den Hash über die Signatur aus (c) und die Daten N_{D} (Variante d1). Als Ergebnis ist die Gültigkeit der Identität b und die Gleichheit des entschlüsselten Hashwertes H von der Signatur aus (e) und dem berechneten Hashwert zu erwarten. Als nächster Schritt ist die Identität a aus der Signatur (c) zu überprüfen. Der Hashwert H von Signatur aus (c) ist zu entschlüsseln, der Hashwert über die Daten N_{D} zu berechnen und beide Hashwerte zu vergleichen. Als Ergebnis ist die Gültigkeit der Identität a und die Gleichheit des entschlüsselten Hashwertes H von Signatur aus (c) mit dem errechneten Hashwert aus den Daten N_{D} zu erwarten. Treffen beide Ergebnisse erwartungsgemäß zu, so können die Daten N_{D} als Dokument und die Signatur mit der Abgabe einer Willenserklärung des Signierenden der Daten N_{D} angesehen werden.

## Patentansprüche

1. Verfahren zur Generierung eines Dokuments aus beliebig signierten Daten unter Verarbeitung einer Willenserklärung über den Inhalt der Daten mit Hilfe einer nicht mit der Identität des Signierenden in Verbindung stehenden qualifizierten Signatur unter Verwendung von mehreren Signiereinheiten lokal zur Verarbeitung einer Authentifizierungsinformation a und einer Signiereinheit zentral zur Verarbeitung einer Authentifizierungsinformation b zur Erzeugung der qualifizierten Signatur, umfassend die folgenden Schritte
I. beliebige Daten N_{D} liegen dem Signierenden vor (a),
II. Eingabe eines persönlichen Authentifizierungstokens durch den Signierenden,
III. der Signierende erzeugt unter Verwendung einer Signiereinheit lokal einen beliebigen Hash H(N_{D}) über die Daten N_{D} (b),
IV. Erzeugen mit der Signiereinheit lokal unter Verwendung des Hash H(N_{D}) und der Authentifizierungsinformation a, die die Identität des Signierenden eindeutig definiert, einer beliebigen Signatur [Sig[H(N_{D}),a]] (c),
V. Übermitteln i) der Daten N_{D} und Signatur [Sig[H(N_{D}),a]] (d1) oder ii) der Signatur [Sig[H(N_{D}),a]] (d2) von der Signiereinheit lokal zur Signiereinheit zentral, wobei die Signiereinheit zentral einen beliebigen zum qualifizierten Signieren zugelassenen Algorithmus zum Hashen von i) oder ii) einsetzt,
VI. die Signiereinheit zentral einen Hashwert i) H(N_{D,}[Sig[H(N_{D}),a]]) oder ii) H([Sig[H(N_{D}),a]]) über die Daten N_{D} und/oder die von der Signiereinheit lokal erstellte beliebige Signatur [Sig[H(N_{D}),a]] erzeugt (d), und
VII. in einem weiteren Schritt mit der Signiereinheit zentral eine Signatur i) [Sig[H(N_{D,}[Sig[H(N_{D}),a]), b] oder ii) [Sig[H([Sig[H(N_{D}),a]]), b]] aus der Authentifizierungsinformation b, die die Identität der Signiereinheit zentral eindeutig definiert, und entweder dem Hashwert H(N_{D,}[Sig[H(N_{D}),a]]) oder dem Hashwert H([Sig[H(N_{D}),a]]) erzeugt wird (e).

2. Verfahren nach Anspruch 1, **dadurch gekennzeichnet, dass** das Verfahren zumindest die Alternative i) umfasst.

3. Verfahren nach Anspruch 1 oder 2, **dadurch gekennzeichnet, dass** die Authentifizierungsinformation a oder b als Zertifikat auf einem Speichermedium vorliegt.

4. Verfahren nach Anspruch 1 oder 2, **dadurch gekennzeichnet, dass** die Authentifizierungsinformation b als ein von einer Zertifizierungsstelle herausgegebenes Zertifikat auf einem Speichermedium vorliegt.

5. Verfahren nach Anspruch 1 oder 2, **dadurch gekennzeichnet, dass** für jedes Generieren einer Signatur [Sig[H(N_{D}),a]] durch die Signiereinheit lokal die Eingabe des Authentifizierungstokens, vorzugsweise in die Signiereinheit lokal, durch den Signierenden erforderlich ist.

6. Verfahren nach Anspruch 1 oder 2, **dadurch gekennzeichnet, dass** die Signiereinheit zentral durch die erstmalige Eingabe des Authentifizierungstokens aktiviert und sodann für weitere Signierungen die Eingabe des Authentifizierungstokens für die Signiereinheit zentral nicht mehr erforderlich ist.

7. Verfahren nach Anspruch 1 oder 2, **dadurch gekennzeichnet, dass** das Übermitteln i) der Daten N_{D} und der Signatur [Sig[H(N_{D}),a]] (d1) oder ii) nur der Signatur [Sig[H(N_{D}),a]] (d2) von der Signiereinheit lokal zur Signiereinheit zentral unverhinderbar durch den Signierenden automatisch erfolgt.

8. Verfahren nach Anspruch 1 oder 2, **dadurch gekennzeichnet, dass** aus dem Hashwert i) oder ii) aus Schritt VI ohne jede weitere Veränderung und abgesehen von dem Transport unmittelbar in Schritt VII im ersten Fall eine Signatur i) oder im zweiten Fall eine Signatur ii) erzeugt wird.

9. Verfahren nach Anspruch 1 oder 2, **dadurch gekennzeichnet, dass** die Signiereinheit zentral Informationen vorhält, um
1) die Identität jeder der zugeordneten Signiereinheit lokal und/oder, vorzugsweise und,
2) die Identität jede Authentifizierungsinformation a festzustellen,
und
• gemäß festgestellter Identität nach 1) und/oder 2), vorzugsweise 1) und 2),
• in der Signiereinheit zentral eine vorgegebene Berechtigung zugewiesen wird und je nach Berechtigung eine Signatur nach i) oder ii) in der Signiereinheit zentral erstellt wird oder nicht.

10. Verfahren nach Anspruch 1, 2 oder 9, **dadurch gekennzeichnet, dass** die Signatur nach i) oder ii) unabhängig vom Inhalt der Daten N_{D} oder einer Prüfung des Inhalts der Daten N_{D} erstellt wird.

11. Verfahren nach einem der vorhergehenden Ansprüche, **dadurch gekennzeichnet, dass** das Verfahren nur eine Signiereinheit zentral, aber mehrerer Signiereinheiten lokal aufweist, wobei jede Signiereinheit lokal mit der Signiereinheit zentral in unmittelbarer, vorzugsweise nicht lösbarer, Verbindung steht.

12. Verfahren nach einem der vorhergehenden Ansprüche, **dadurch gekennzeichnet, dass** die Signiereinheit zentral ohne Zugriff auf dritte Authentifizierungsstellen signiert.
